# EUROPÄISCHE PATENTSCHRIFT

(11) **EP 2 046 233 B1**
(45) Veröffentlichungstag und Bekanntmachung des Hinweises auf die Patenterteilung: **05.10.2011**
(21) Anmeldenummer: 07729184.7
(22) Anmeldetag: 16.05.2007
(51) Int. Cl.: A61C 5/10, A61C 13/00

(54) **ELEMENTESATZ ZUR HERSTELLUNG EINER DENTALEN PROTHESE, SYSTEM ZUR HERSTELLUNG EINER DENTALEN PROTHESE ODER EINES ELEMENTESATZES SOWIE ENTSPRECHENDE HERSTELLVERFAHREN**
SET OF ELEMENTS FOR PRODUCING A DENTAL PROSTHESIS, SYSTEM FOR PRODUCING A DENTAL PROSTHESIS OR A SET OF ELEMENTS, AND CORRESPONDING PRODUCTION METHODS
JEU D'ÉLÉMENTS POUR LA PREPARATION D'UNE PROTHÈSE DENTAIRE, SYSTÈME DE PRÉPARATION D'UNE PROTHÈSE OU D'UN JEU D'ÉLÉMENTS ET PROCÉDÉ DE FABRICATION CORRESPONDANT

(30) Priorität: 19.07.2006 DE 102006033794
(43) Veröffentlichungstag der Anmeldung: 15.04.2009
(73) Patentinhaber: BEGO Bremer Goldschlägerei Wilh.-Herbst GmbH & Co KG, 28359 Bremen (DE)
(72) Erfinder: DIERKES, Stephan, 28357 Bremen (DE); EILERS, Jan, 27283 Verden (DE); HINRICHS, Ole, 28209 Bremen (DE); STOLZNER, Wolfgang, 27777 Ganderkesee (DE); FRANCO, Bernardo, 28307 Bremen (DE); VAGT, Carsten, 28876 Oyten (DE)
(74) Vertreter: Stilkenböhmer, Uwe Michael
(86) Internationale Anmeldenummer: PCT/EP2007/054736
(87) Internationale Veröffentlichungsnummer: WO 2008/009495

(56) Entgegenhaltungen:
- EP-A- 1 661 529
- EP-A1- 1 293 174
- WO-A-02/076327
- WO-A-03/017864

## Beschreibung

Die vorliegende Erfindung betrifft einen Elementesatz (Teilesatz) zur Verwendung bei der Herstellung einer dentalen Prothese, insbesondere einer Krone, einer Brücke, eines Inlays oder eines Onlays. Die Erfindung betrifft zudem Verfahren zum Herstellen einer entsprechenden dentalen Prothese mit einem Gerüst und einer Verblendung sowie ein System zur Herstellung einer dentalen Prothese eines erfindungsgemäßen Elementesatzes. Schließlich betrifft die Erfindung auch ein Verfahren zur Herstellung eines erfindungsgemäßen Elementesatzes.

Mit einer dentalen Prothese beispielsweise einer Krone, kann ein beschädigter oder zerstörter Zahn ergänzt, ersetzt oder nachgebildet werden. Hierbei bestehen verschiedene Wahlmöglichkeiten bezüglich des Materials der Prothese.

Hinsichtlich seiner Funktion kann ein Zahn (partiell oder vollständig) in ausreichender Weise durch eine metallische Prothese ergänzt oder ersetzt werden. Aus ästhetischen Gründen wird jedoch in vielen Fällen davon abgesehen, eine dentale Prothese im ganzen metallisch auszuführen.

Eine Steigerung bezüglich der Ästhetik (Transluzenz) aber vor allem der Biokompatibilität stellt eine Prothese aus einer Glaskeramik da. Bei diesem Material handelt es sich um eine sogenannte Presskeramik, weil der Herstellungsprozess das Pressen des geschmolzenen Glases in eine Form ist. Um farbliche Verläufe auf dieser Prothese zu erreichen, kann sie nachträglich noch mittels Pinsel bemalt werden. Der Einsatzbereich dieser Art der Vollkeramik ist jedoch auf Grund der niedrigen Festigkeit auf Kronen und maximal dreigliedrige Frontzahnbrücken begrenzt.

Die besten ästhetischen Ergebnisse erhält man jedoch, wenn man ein keramisches bzw. metallisches Gerüst mit einer geschichteten Verblendung versieht. Diese Verblendung erfolgt zumindest teilweise. Das Gerüst bestimmt die wesentlichen mechanischen Eigenschaften wie Festigkeit und Biegesteifigkeit, während die optischen Eigenschaften und die allgemeinen Oberflächeneigenschaften der dentalen Prothese durch die Verblendung eingestellt werden. Als Materialien werden für die Verblendung in der Regel Kunststoff oder Keramik eingesetzt. Verblendkeramiken werden Verblendkunststoffen in vielen Fällen vorgezogen, da nur die ausgezeichneten mechanisch-physikalischen Werte wie Härte und Festigkeit von Keramik einen Langzeiteinsatz ermöglichen.

Bei der Verwendung von Verblendkeramik ist auf die Abstimmung der Wärmeausdehnungskoeffizienten (WAK) von Gerüstmaterial und Verblendmaterial zu achten. Weichen die WAK zu sehr voneinander ab, so kommt es zu Spannung. Dies kann zum Ablösen der oder zu Rissen in der Verblendung führen.

Vielfach wird das Verblendmaterial manuell, z.B. mit einem Pinsel, auf das Gerüst aufgetragen. Dabei werden bei der Verblendung eines Keramik- bzw. Metallgerüsts beispielsweise eine Dentinkernmasse, eine Transparenzmasse und eine Schneidmasse aufgeschichtet. Zusätzlich wird auf dem Metallgerüst zuvor noch eine Opakermasse aufgetragen. Das Aufbringen dieser Schichten und die dazugehörigen Brände sind zeitaufwändig und das Ergebnis kann abhängig von der (Kunst-)Fertigkeit des Bearbeiters von unterschiedlicher Qualität sein.

In DE 27 05 770 A1 wird vorgeschlagen, mittels Elektrophorese Verblendkeramik auf ein metallisches Gerüst aufzutragen. Durch die elektrophoretische Abscheidung lassen sich allerdings nur gleichmäßige Schichten erzeugen. Es gibt keine gestalterischen Möglichkeiten, die Außenkontur zu beeinflussen (abgesehen von der Schichtstärke). Daher kann auf eine manuelle Nacharbeit nicht verzichtet werden. Diese Methode eignet sich darüber hinaus auch nur für Metallgerüste, da die zu beschichtende Oberfläche elektrisch leitend sein muss.

Aus US 5,092,022 sind Verfahren zur Herstellung verblendeter metallkeramischer Kronen bekannt. Die Krone wird aus zueinander passenden vorgegebenen Bestandteilen (Gerüst und Verblendung) hergestellt, wobei die Außenkontur des Gerüstes und die Innenkontur der Verblendung standardisiert vorgegeben sind und nur die Innenkontur des Gerüstes und die Außenkontur der Verblendung mittels abtragenden Formens an den Einsatzzweck angepasst werden. Alternativ wird zunächst das Gerüst erstellt und die Innenkontur der Verblendung vor einem Zusammenbau passend zur Außenkontur des Gerüstes bearbeitet. Zudem wird in US 5,092,022 vorgeschlagen, ein Gerüst in der gewünschten Form sowie eine die Außenkontur der Verblendung abbildende Außenform herzustellen, Gerüst und Außenform zu einer Gussform zu kombinieren und eine Kunststoff-Verblendung direkt auf dem Gerüst zu gießen.

Standardisierte, vorgegebene Formen lassen sich oft nur schwierig an die speziellen Gegebenheiten des Einzelfalls anpassen. Werden Gerüst und Verblendung durch maschinelles Bearbeiten wie in US 5,092,022 aufeinander angepasst, so müssen die Fertigungstoleranzen sehr gering sein, was nur mit entsprechend hohem Aufwand möglich ist. Zudem besteht die Gussform nach US 5,092,022 aus zumindest zwei Bestandteilen, wodurch bevorzugt an den Kontaktflächen zwischen den Formteilen Gießfehler auftreten, die eine erweiterte Nacharbeitung notwendig machen.

Es ist bekannt, manuell ein Wachsmodell eines Verblendkeramikaufbaus zu modellieren, das Modell zusammen mit dem Gerüst einzubetten, das Wachsmodell anschließend auszubrennen und die derart erzeugte Form mit einer Keramik, beispielsweise mit einer Presskeramik aufzufüllen, um so die Prothese zu fertigen (siehe G.G.J Dröge: "Die Metallgerüst-Konstruktion für das Heißpressverfahren" das dental-labor, Heft 3/1977, G.G.J. Dröge: "Die Porzellan-Press-Technik (I)", das dental-labor, Heft 4/1969 und E.R. McPhee: "Heißpressverfahren bei der Porzellan/Metall-Aufbrenntechnik", das dental-labor, Heft 10/1976).

Das als "Wachsausschmelzguss" oder "lost-wax"-Verfahren bezeichnete Verfahren wird beispielsweise nach DE 199 29 441 A1 zur Herstellung vollanatomisch modellierter Kronen oder teilanatomisch modellierter Gerüste verwendet.

Aus EP 0 033 492 A1 ist ein Verfahren zur Herstellung eines Gießmodells aus Wachs für ein Primärteil einer Teleskopkrone bekannt, bei der die Kontur des Gießmodells auf Basis gespeicherter geometrischer Daten eines Zahnstumpfes errechnet und abtragend geformt wird.

WO 03/017864 A1 lehrt ein Verfahren zur Herstellung einer Vollgussprothese aus Metall, bei dem geometrische Daten eines Gebisses dazu verwendet werden, automatisiert einen Prototypen der zu formenden Prothese herzustellen, der im "lost-wax"-Verfahren zum Erzeugen einer Gussform für die ganze Prothese dient.

Mit den aus EP 0 033 492 A1 und WO 03/017864 A1 bekannten Verfahren lassen sich nur einteilige Prothese aus jeweils einem einzigen Material herstellen, nicht jedoch eine dentale Prothese mit einem Gerüst und einer Verblendung.

Ein Verfahren zur Herstellung einer dentalen Prothese mit einem Gerüst und einer Verblendung ist aus DE 199 22 870 A1 bekannt. Das manuelle Auftragen von Verblendmaterial wird hierbei durch ein computerunterstütztes, automatisiertes Auftragen unter Einsatz von Beschichtungsdüsen ersetzt. Dieses Verfahren erfordert jedoch einen komplexen Vorrichtungsaufbau und lässt sich daher in der Praxis kaum sinnvoll einsetzen.

Gemäß EP 1 543 797 A1 wird ähnlich zur Lehre von US 5,092,022 eine zum Verpressen von Verblendmaterial vorgesehene Form auf Basis eines Geometriedatensatzes der zu erzeugenden Prothese durch Fräsen oder Schleifen erzeugt.

Die Form nimmt das zu verblendende Gerüst auf und der verbleibende Hohlraum wird mit der Verblendkeramik durch Einpressen gefüllt.

WO 2005/046502 A1 beschreibt ein System und eine Anordnung zum Herstellen dentaler Prothesenteile. Insbesondere beschrieben wird ein Verfahren, in dem eine Wachsform in eine Einbettmasse eingebettet und dann ausgebrannt wird. In die resultierende Negativform wird dann unter Vakuum und unter hohen Temperaturen Porzellanmaterial eingepresst. Als Ergebnis des in der WO 2005/046502 beschriebenen Verfahrens resultiert eine dentale Krone, welche aus zwei Schichten besteht, wobei eine erste Schicht aus Porzellanmaterial besteht und die Außenform der dentalen Krone wiedergibt und wobei eine zweite Schicht aus einem anderen Material besteht und eine Kappe bildet, deren innere Oberfläche der Außenfläche zum Beispiel eines Zahnstumpfes entspricht.

Aus DE 81 20 687 ist ein aus einer rückstandslos ausschmelzbaren und/oder verbrennbaren Wachsmischung oder einem entsprechenden Kunststoff bestehender Körper zum Erstellen eines Gießmodells einer Zahnkrone bekannt. Dieser Körper ist vorgeformt und wird im Mundraum an die jeweilige Zahnsituation angepasst, Zur Reduzierung des Materialeinsatzes wird der Abstand zwischen einer Innenwandung des Körpers zum Stumpf durch Überlegungen bestimmt, die aus der Beanspruchung des Körpers resultieren. Gemäß DE 81 20 687 wird eine Edelmetallzahnkrone mit dem Körper als Gussmodell hergestellt. Beim Aufsetzen der Krone wird der Spalt zwischen der Krone und dem Stumpf mit Zement verfüllt.

EP 1 661 529 offenbart eine Kombination aus einem Modellteil in Form eines Wachsmusters einer Krone und einem Gerüst in Form einer Substruktur, die mit einer Opakerschicht versehen ist. Das Wachsmuster der Krone wird mittels Rapid Prototyping auf der Basis eines elektronischen Modells hergestellt, welches auf ein elektronisches Modell der mit der Opakerschicht versehenen Substruktur aufsetzt. Die Kombination aus der mit einer Opakerschicht versehenen Substruktur und dem darauf aufgepressten Wachsmuster der Krone wird anschließend in eine mit einem Gießkanal versehene Einbettungsmasse eingebracht, das Wachs wird ausgebrannt und ein keramisches oder anderes Dentalmaterial eingepresst. So wird eine zweiteilige Dentalrestauration aus Substruktur und Krone erhalten.

Es war die Aufgabe der vorliegenden Erfindung, Elementesätze zur Verwendung bei der Herstellung einer dentalen Prothese, Verfahren zum Herstellen einer dentalen Prothese sowie Systeme zur Herstellung einer dentalen Prothese oder eines erfindungsgemäßen Elementesatzes anzugeben, welche in einfacher Weise die Herstellung einer dentalen Prothese mit einem Gerüst und einer Verblendung ermöglichen. Die Erfindung sollte dabei insbesondere auch auf Gerüste anwendbar sein, welche Unterschneidungen aufweisen und/oder mit einer Opakerschicht versehen werden.

Gemäß einem ersten Aspekt der vorliegenden Erfindung wird die gestellte Aufgabe gelöst durch einen Elementesatz gemäß Anspruch 1 (d. h. einen Satz von Elementen (Teilen)), zur Verwendung bei der Herstellung einer dentalen Prothese, insbesondere einer Krone, einer Brücke, eines Inlays oder eines Onlays, umfassend:
ein Gerüst und
- ein oder mehrere Modellteile zur Definition von (in der Regel wesentlichen) Teilen der Außenkontur einer Verblendung für das Gerüst, wobei das bzw. die Modellteile auf das Gerüst so aufsetzbar sind, dass gleichzeitig
   (i) zwischen dem bzw. den Modellteilen und dem Gerüst ein Spalt verbleibt
      und
   (ii) das bzw, die Modellteile Teile der Außenkontur (in der Regel wesentliche Teile der Außenkontur) definieren,
wobei das oder die Modellteile (5) bei einer Temperatur schmelzbar oder verbrennbar sind, bei der das Gerüst (3) stabil ist, und das Gerüst und das bzw. die mehreren Modellteile so gestaltet sind, dass zwischen ihnen zumindest abschnittsweise ein Spalt mit einer Dicke im Bereich von 0,05 bis 3 mm vorliegt, wenn das bzw. die Modellteile in vorgesehener Weise die Außenkontur der dentalen Prothese definieren. Die Unter ansprüche 2-6 geben zweckmässige Weiterbildungen an.

Das Gerüst besitzt hierbei regelmäßig eine Innenform, welche der Außenform einer Behandlungssituation (zum Beispiel eines Zahnstumpfes) mit hoher Genauigkeit entspricht. Das eine oder die mehreren Modellteile definieren (mehr oder weniger vollständig und mehr oder weniger präzise) die Außenkontur der dentalen Prothese, werden jedoch in manchen Fällen noch weiter verarbeitet, zum Beispiel unter Verwendung abtragender Formgebungsverfahren. Es ist erfindungsgemäß ausreichend, wenn das bzw. die Modellteile die Außenkontur der dentalen Prothese grob definieren und in späteren Verfahrensschritten (siehe dazu unten) eine genaue Anpassung an die Bedürfnisse der Mundsituation erfolgt. Vorzugsweise definieren das bzw. die Modellteile zumindest die Kaufläche oder Teile davon sowie Teile der Seitenflächen der Verblendung.

Ein erfindungsgemäßer Elementesatz ist so ausgelegt, dass das bzw. die Modellteile auf das Gerüst aufsetzbar sind. Die Innenform des bzw. der Modellteile ist dabei jedoch so gewählt, dass zwischen dem bzw. den Modellteilen und dem Gerüst ein Spalt bleibt, wenn das bzw. die Modellteile so auf das Gerüst aufgesetzt sind, dass sie die Außenkontur der dentalen Prothese definieren. Hierin liegt ein bedeutsamer Unterschied zwischen dem erfindungsgemäßen Elementesatz und bisher bekannten Sätzen von Prothesenbauteilen, bei denen ein Gerüst ohne Vorsehen eines Spaltes mit einem Modellteil kontaktiert wird, welches die Außenkontur der Verblendung definiert.

Vorzugsweise ist der Spalt zwischen dem bzw. den Modellteilen und dem Gerüst, so ausgestaltet, dass in der Anordnung, in der das bzw. die Modeliteile auf das Gerüst aufgesetzt sind und das bzw. die Modeliteile die Außenkontur definieren, überall ein Abstand zwischen dem bzw. den Modellteilen und dem Gerüst besteht, sich diese somit nirgends berühren.

In einem erfindungsgemäßen Elementesatz sind das Gerüst und das bzw. die mehreren Modeliteile so gestaltet, dass zwischen ihnen zumindest abschnittsweise ein Spalt mit einer Dicke im Bereich von 0,05 bis 3 mm vorliegt, wenn das bzw. die Modellteile in vorgesehener Weise die Außenkontur der dentalen Prothese definieren. Bevorzugte Spaltbreiten liegen im Bereich von 0,1 bis 1,5 mm.

Die Dicke des bzw. der Modellteile liegt vorzugsweise im Bereich von 0,2 bis 1,5 mm, besonders bevorzugt im Bereich von 0.3 bis 0,9 mm. Vielfach bevorzugt ist es, die Dicke des bzw. der Modellteile im Wesentlichen konstant zu wählen; in manchen Fällen kann die Dicke des bzw. der Modelle jedoch auch variieren, zum Beispiel um aus der Linse die Höcker vorragen zu lassen oder ein Modellteil in Richtung Präparationsrand verjüngend auszubilden. Auch in solchen Fällen wird jedoch vorzugsweise der Dickenbereich zwischen 0,2 und 1,5 mm nirgends verlassen. Ausnahmen sind jedoch möglich.

Das Gerüst eines erfindungsgemäßen Elementesatzes umfasst oder besteht vorzugsweise aus Metall, einer Metalllegierung, einer Glaskeramik oder Keramikmaterial und besitzt somit einen hohen Schmelzpunkt von vorzugsweise > 1000 °C. Das bzw. die Modellteile eines erfindungsgemäßen Elementesatzes sind vorzugsweise bei einer Temperatur schmelzbar oder verbrennbar, bei der das Gerüst stabil ist, d. h. nicht schmilzt, verbrennt, schrumpft oder sich verzieht. Während des Aufheizens kann sich das Gerüst aber entsprechend seines Wärmeausdehnungskoeffizienten reversibel verändern.

Vorzugsweise bestehen das bzw. die Modellteile aus Wachs und/oder Kunststoff; es sind allgemein Materialien bevorzugt, die bei Temperaturen ≤ 1000 °C, vorzugsweise ≤ 900 °C, bei einer Haltezeit von 1 h, bis auf einen Restaschegehalt von ≤ 0,25 Gew.-%, vorzugsweise bis auf einen Restaschegehalt von ≤ 0,05 Gew.-% verbrennbar sind.

Vorzugsweise umfasst ein erfindungsgemäßer Elementesatz ein Adhäsiv zum (zumindest teilweise) Ausfüllen des Spalts und zum Fixieren des bzw. der Modellteile auf dem Gerüst. Ein solches Adhäsiv sollte dabei ebenfalls bei einer Temperatur schmelzbar oder verbrennbar sein, bei der das Gerüst stabil ist. Im zusammengesetzten Zustand befindet sich somit auf dem Gerüst eine Adhäsivschicht und auf der Adhäsivschicht befinden sich ein oder mehrere Modellteile, welche die Außenkontur einer Verblendung definieren. Das Adhäsiv füllt (zumindest teilweise) einen Spalt zwischen dem Gerüst und dem bzw. den Modellteilen aus und fixiert das bzw. die Modellteile auf dem Gerüst. Das Adhäsiv und das bzw. die Modellteile bilden gemeinsam das Modell einer Verblendung, wobei die Außenkontur (zumindest teilweise) durch das bzw. die Modellteile und die Innenkontur der Verblendung durch das Adhäsiv (an der Grenzfläche zum Gerüst) definiert ist. Der Begriff Adhäsiv umfasst vorliegend auch Füllmaterialien umfassende Adhäsive, die gegenüber Gerüst und Modellteil bzw. Modellteilen eine Adhäsivwirkung besitzen. Vorzugsweise verbrennt auch das Adhäsiv bei Temperaturen ≤ 1000 °C, vorzugsweise ≤ 900 °C, bei einer Haltezeit von 1 h, bis auf einen Restaschegehalt von ≤ 0,25 Gew.-%, vorzugsweise ≤ 0,05 Gew.-%.

Vorzugsweise ist das Adhäsiv eine bei 25 °C zähfließende Masse, welche vorzugsweise innerhalb weniger Minuten härtbar ist, zum Beispiel bei Bestrahlung mit Licht, durch Erwärmen, Trocknen oder mittels chemischer Reaktion. Des Weiteren sind auch Adhäsive verwendbar, welche bei einer höheren Temperatur - vorzugsweise einer Verarbeitungstemperatur zwischen 30 und 100°C - fließfähig sind und beim Abkühlen aushärten.

Ein erfindungsgemäßer Elementesatz kann neben den vorstehend genannten Elementen auch noch weitere umfassen, die insbesondere ausgewählt sein können aus der Gruppe bestehend aus: Material zur Herstellung eines Modells eines Gießkanals; Formmaterial (zum Beispiel eine handelsübliche Einbettmasse); Anmischflüssigkeit für ein Formmaterial; Verblendmaterial (insbesondere keramisches Verblendmaterial zur Verwendung als Presskeramik in einem Heißpressverfahren, z. B. in Form von Presskeramikpellets oder Verblendkeramikzylindern); Adhäsiv; Modelliermaterial (z. B. Wachs), z. B. zum nachträglichen Auftragen von Material auf das Modell oder zum Erzeugen des Randschlusses zwischen der Prothese und der Präparationsgrenze, Glasurmasse, Malfarben, Opaker, Pressstempel.

Sofern der Elementesatz ein separates Material zur Herstellung eines Modell eines Gießkanals umfasst, ist dieses Material vorzugsweise ebenfalls bei einer Temperatur schmelz- oder verbrennbar, bei der das Gerüst stabil ist. Es gelten vorzugsweise die zu den Modellteilen und dem Adhäsiv genannten bevorzugten Verbrennbarkeitskriterien.

Bevorzugt ist ein erfindungsgemäßer Elementesatz, in dem das Gerüst ein Metall, eine Metalllegierung (edelmetallfrei oder edelmetallhaltig), eine Glaskeramik und/oder ein Keramikmaterial umfasst oder daraus besteht. Metalle und Metalllegierungen eignen sich aufgrund ihrer mechanischen Eigenschaften gut, einen Zahn- bzw. ein Zahnteil funktionell zu ersetzen. In funktioneller Hinsicht zahnähnliche Eigenschaften lassen sich auch mit geeigneten Glaskeramiken und Keramiken erreichen. Durch den Einsatz der geeigneten Materialien für das Gerüst können die mechanischen Eigenschaften der ganzen Prothese weitgehend vorgegeben werden.

In Abhängigkeit von den Bedürfnissen des Einzelfalles ist es vorteilhaft, wenn in einem erfindungsgemäßen Elementesatz das Gerüst (a) eine anatomisch reduzierte Form (mit in der Regel variierender Dicke) oder (b) eine zumindest im wesentlichen konstante Dicke besitzt. Eine anatomisch reduzierte Form liegt dabei vor, wenn die äußere Gestalt des Gerüstes der äußeren Gestalt der fertigen dentalen Prothese ähnelt, wobei das Gerüst üblicherweise variierende Dicken besitzt. Vergleiche hierzu auch die Beschreibung bevorzugter Ausgestaltungen weiter unten.

Wenn das Gerüst eines erfindungsgemäßen Elementesatzes eine oder mehrere Unterschneidungen besitzt und/oder das Gerüst einer Brücke ist, sind vorteilhafterweise in einem erfindungsgemäßen Elementesatz zwei oder mehr Modellteile vorgesehen, welche gemeinsam die Außenkontur der Verblendung für das Gerüst definieren und vorzugsweise präzise aneinander angepasst sind. Es ist jedoch zum Beispiel selbst bei Verwendung eines Gerüstes mit einer oder mehreren Unterschneidungen nicht in jedem Falle erforderlich, zwei oder mehr Modellteile vorzusehen; in manchen Fällen genügt es vielmehr, einen ausreichend breiten Spalt zwischen Gerüst (mit Unterschneidungen) und Modellteilen oder ein in der Länge verkürztes Modellteil vorzusehen. Im letztgenannten Fall kann eine ergänzende Modellierung der nicht durch das Modellteil definierten Verblendung z. B. mit Wachs erfolgen.

Weitere bevorzugte Ausgestaltungen eines erfindungsgemäßen Elementesatzes ergeben sich aus der nachfolgenden Beschreibung erfindungsgemäßer Verfahren und Systeme, den beigefügten Figuren nebst Figurenbeschreibung und den beigefügten Patentansprüchen.

Die vorliegende Erfindung betrifft auch ein Verfahren zum Herstellen einer dentalen Prothese mit einem Gerüst und einer Verblendung, insbesondere einer Krone, einer Brücke, eines Inlays oder eines Onlays, mit den Schritten:
- Herstellen oder Bereitstellen eines erfindungsgemäßen Elementesatzes wie vorstehend beschrieben (insbesondere in einer der als bevorzugt angegebenen Ausgestaltungen),
- Aufsetzen des bzw. der Modellteile auf das Gerüst, so dass
   (i) zwischen dem bzw. den Modellteilen und dem Gerüst ein Spalt verbleibt und gleichzeitig
   (ii) das bzw. die Modellteile die Außenkontur und gegebenenfalls einen Gießkanal definieren,
- Fixieren des bzw. der Modellteile auf dem Gerüst mittels des bzw. eines Adhäsivs (das Adhäsiv wird üblicherweise bereits auf das Gerüst und/oder innenseitig auf das in dem Modell appliziert, bevor das Modell auf das Gerüst aufgesetzt wird, Adhäsivüberschüsse werden dabei aus dem Spalt zwischen Gerüst und Modellteil(en) herausgedrückt),
- Bilden einer Negativform einer Verblendung für das Gerüst durch Einschließen von Adhäsiv und Modellteil bzw. Modellteilen zwischen dem Gerüst und einem Formmaterial und anschließendes Entfernen von Adhäsiv und Modellteil bzw. Modellteilen und
- Füllen der Negativform mit Verblendmaterial zur Herstellung der dentalen Prothese.

Hinsichtlich des erfindungsgemäßen Verfahrens gelten die obigen Angaben zu bevorzugten erfindungsgemäßen Elementesätzen entsprechend.

In dem erfindungsgemäßen Verfahren ist ein erfindungsgemäßer Elementesatz, wie er weiter oben beschrieben ist, herzustellen oder bereitzustellen. Das Gerüst und/oder das bzw. die Modellteile zur Definition der Außenkontur einer Verblendung für das Gerüst eines solchen Elementesatzes können dabei durch aufbauende und/oder abtragendes Formen hergestellt werden. Das Formen des Gerüstes und/oder des bzw. der Modellteile erfolgt hierbei vorzugsweise mittels computerunterstützter (rechnergestützter) Fertigung, vorzugsweise jeweils mittels eines Rapid-Prototyping-Verfahrens. Vorzugsweise werden zur Herstellung des Gerüsts Fertigungsverfahrens wie das Fräsen (insbesondere bei Einsatz keramischen Materials) oder Lasersintern (jeweils vorzugsweise als Rapid-Prototyping-Verfahren) eingesetzt. Zur Herstellung des bzw. der Modellteile werden vorzugsweise aufbauende Verfahren wie das 3D-Printen oder die Sterolithographie oder abtragende Verfahren wie das Fräsen (jeweils vorzugsweise als Rapid-Prototyping-Verfahren) eingesetzt.

Das aufbauende und/oder abtragende Formen von Gerüst und/oder Modellteile(n), welches vorzugsweise mittels computerunterstützter Fertigung und besonders bevorzugt mittels einer Rapid-Prototyping-Verfahren erfolgt, wird vorzugsweise jeweils auf Basis vorbestimmter dreidimensionaler Geometriedaten durchgeführt. Die dreidimensionalen Geometriedaten werden dabei vorbestimmt, indem die Mundsituation, eine (Wachs-)Modellation und/oder ein Abdruck der Mundsituation gescannt werden und die dreidimensionalen Geometriedaten auf Basis der so erhaltenen Scan-Daten sowie gegebenenfalls zusätzlicher Benutzereingaben rechnergestützt vorbestimmt werden. Sofern ein Abdruck der Mundsituation gescannt wird, wird vorzugsweise auch der Gegenbiss gescannt. Zusätzliche Benutzereingaben können beispielsweise von einem Zahntechniker vorgenommen werden, wobei beispielsweise der Scan-Datensatz durch zusätzlichen Benutzereingaben manipuliert wird. So kann der Zahntechniker beispielsweise Kontaktpunkte setzten, in denen die dentale Prothese Nachbarzähne berühren soll. Auf Basis der gegebenenfalls durch zusätzliche Benutzereingaben manipulierten Scan-Daten wird rechnerisch vorzugsweise ein Vorschlag für die Gesamtgeometrie der verblendeten Einheit sowie die Teilgeometrien von Gerüst und Modellteil bzw. Modellteilen gemacht, die beispielsweise ein Zahntechniker mittels vorgesehener Zeichnungsfunktionen rechnergestützt weiter verändern kann. Auf Basis der wie beschrieben erhaltenen bzw. erstellten Daten wird dann vorzugsweise rechnergestützt die Zusammensetzbarkeit von Gerüst und Modellteil bzw. -teilen berechnet bzw. gewährleistet. Bei Diskrepanzen wird dies beispielsweise auf einem Computermonitor angezeigt und/oder es werden automatisch Korrekturen an den dreidimensionalen Geometriedaten für das Gerüst und/oder das bzw. die Modellteile vorgenommen. Darüber hinaus berechnet das Programm vorzugsweise automatisch das Volumen der zu erzeugenden Verblendung und gibt beispielsweise die erforderliche Masse für einzusetzende Presskeramikzylinder an (zum Einsatz von Presskeramik siehe unten).

Das Aufsetzen des bzw. der Modellteile auf das Gerüst erfolgt in einem erfindungsgemäßen Verfahren so, dass (i) zwischen dem bzw. den Modellteilen und dem Gerüst ein (üblicherweise mit Adhäsiv gefüllter) Spalt verbleibt und gleichzeitig (ii) das bzw. die Modellteile die Außenkontur (einer herzustellenden dentalen Prothese) definieren. Das Aufsetzen des bzw. der Modellteile auf das Gerüst erfolgt dabei vorzugsweise in einem Artikulator; sofern primär Gerüste eingesetzt werden, die im Wesentlichen metallisch sind, wird auf diese zuvor vorzugsweise ein Opaker aufgetragen (das resultierende Gerüst umfasst dann beispielsweise eine Metalllegierung und ein Opaker-Keramikmaterial). Bei Herstellung einer dentalen Brücke oder Krone kann es erforderlich sein, dass zwei oder mehr Modellteile auf ein Gerüst aufgesetzt werden. Dies ist beispielsweise häufig der Fall, wenn Unterschneidungen den Einsatz eines einzelnen Modellteils ausschließen oder erschweren. Es empfiehlt sich, vor dem Aufsetzen des bzw. der Modellteile zunächst das Gerüst auf ein Meistermodell (z. B. eines Zahnstumpfes) aufzusetzen. Zudem empfiehlt es sich, bereits vor dem Aufsetzen des bzw. der Modellteile auf das Gerüst Adhäsiv auf die Innenseite des bzw. der Modellteile und/oder die Außenseite des Gerüstes zu applizieren. Anhand des Gegenbisses und der Nachbarzähne lassen sich im Artikulator das bzw. die Modellteile leicht in die gewünschte Position ausrichten, in der sie die Außenkontur definieren. Überschüssige Teile des bzw. der Modellteile können im Bedarfsfall beispielsweise durch Fräsen entfernt werden. Sofern es erwünscht ist, kann auch nach dem Aufsetzen des bzw. der Modellteile zusätzliche Modellteilmasse auf das bzw. die Modellteile appliziert werden, um eine lokale Erhöhung der Modellteildicke zu erzeugen. Sofern bereits vor dem Aufsetzen Adhäsiv auf das bzw. die Modellteile und/oder das Gerüst appliziert wurde, können bereits beim Aufsetzen vorhandene Spalte oder Fehlstellen zwischen der Präparationsgrenze (am Meistermodell) und dem Gerüst sowie zwischen der Präparationsgrenze und dem bzw. den Modellteilen mit dem Adhäsiv aufgefüllt werden; das Adhäsiv härtet dann im Spalt zwischen dem bzw. den Modellteilen und dem Gerüst aus und fixiert das bzw. die Modellteile und das Gerüst relativ zueinander. Überschüssiges Adhäsiv kann in der Nähe der Präparationsgrenze zwischen Modell/Modellen und Gerüst bzw. zwischen Modell/Modellen und Meistermodell aus den Spalt herausgedrückt werden. Damit kann gewährleistet werden, dass die zu erzeugende Prothese einen guten Randschluss zur Präparationsgrenze hat. Der Adhäsivüberschuss kann anschließend entfernt werden. Es kann alternativ eine Adhäsivmenge verwendet werden, die nicht ausreicht, um den Spalt zwischen Modell/Modellen und Gerüst mehr als aufzufüllen, so dass kein Randschluss der Prothese zur Präpartionsgrenze erzeugt wird. In diesem Fall wird der Randschluss üblicherweise durch nachträgliches Auftragen von Adhäsiv oder einer anderen aushärtbaren Masse aufgefüllt.

Im Rahmen des erfindungsgemäßen Verfahrens wird üblicherweise separat jeweils ein Gießkanal für jede zu verblendende Einheit (Käppchen und Zwischenbrückenglieder stellen jeweils eine Einheit dar) aus einem ausbrennbaren Material (wie zum Beispiel Wachs oder Kunststoff) auf dem bzw. den Modellteilen angebracht werden.

Das so präparierte Gerüst (umfassend das Gerüst selbst, ein oder mehrere Modellteile sowie Adhäsiv und gegebenenfalls einen separaten Gießkanal) wird anschließend in ein Formmaterial eingebettet, so dass Adhäsiv und Modellteil bzw. Modellteile (sowie üblicherweise ein separat eingebrachter Gießkanal) zwischen dem Gerüst und dem Formmaterial eingeschlossen werden. Dieser Verfahrensschritt erfolgt üblicherweise unter Verwendung einer Muffel. Beim Vorwärmen der Muffel (welches in üblicher Weise in einem Vorwärmeofen erfolgen kann) werden das bzw. die Modellteile gemeinsam mit dem Adhäsiv (einschließlich gegebenenfalls vorhandener Füllmaterialien) entfernt, vorzugsweise ausgeschmolzen oder ausgebrannt. Es bildet sich so in an sich bekannter Weise eine Negativform (Hohlform) einer Verblendung, welche durch das Gerüst und das Formmaterial begrenzt ist. Die Negativform wird dann vorzugsweise mittels eines Heißpressverfahrens mit Verblendmaterial zur Herstellung der verblendeten dentalen Prothese gefüllt. Vorzugsweise wird bei Temperaturen zwischen 700 °C und 1100 °C eine Presskeramik in plastischem Zustand in die Negativform gepresst. Anschließend wird das überpresste Gerüst (bestehend aus Gerüst und darauf aufgepresster Presskeramik) von der Einbettmasse befreit und der Anguss (Presskeramikmaterial im Gießkanal) abgetrennt. Eine individuelle Farbgebung und Charakterisierung kann mittels üblicher Maltechniken erfolgen. Üblicherweise wird in einem letzten Arbeitsschritt Glasurmasse in einer gelartigen Konsistenz angemischt und in ausreichend dicker Schicht aufgetragen. Fissuren und der Kronenrandbereich können von diesen letzten Verfahrensschritten ausgenommen werden. Durch den Auftrag von Glasurmasse wird die Oberfläche der Restauration versiegelt und diese erhält einen schönen und natürlichen Glanz.

Insbesondere wenn die dentale Prothese eine Brücke ist und/oder das Gerüst eine oder mehrere Unterschneidungen besitzt, werden in einem erfindungsgemäßen Verfahren vorzugsweise zwei oder mehr Modellteile eingesetzt.

In einem erfindungsgemäßen Verfahren ist das eingesetzte Formmaterial vorzugsweise ein feuerfestes Material, besonders bevorzugt eine (insbesondere handelsübliche) Einbettmasse. Die technischen Parameter der Einbettmasse sind vorzugsweise an die des Gerüsts und an die der Verblendung angepasst.

Besonders bevorzugt ist ein erfindungsgemäßes Verfahren zur Herstellung einer dentalen Prothese mit folgenden Schritten:
- Herstellen eines erfindungsgemäßen Elementesatzes (vorzugsweise in einer oben als bevorzugt angegebenen Ausgestaltung), wobei das im Elementesatz vorhandene Gerüst und/oder das bzw. die darin vorhandenen Modellteile computergestützt durch aufbauendes und/oder abtragendes Formen auf Basis vorbestimmter dreidimensionaler Geometriedaten hergestellt werden,
- Aufsetzen, vorzugsweise mittels eines Artikulators, des bzw. der Modellteile auf das Gerüst, so dass
   (i) zwischen dem bzw. den Modellteilen und dem Gerüst ein Spalt verbleibt und gleichzeitig
   (ii) das bzw. die Modellteile die Außenkontur und gegebenenfalls einen Gießkanal definieren,
- Fixieren des bzw. der Modellteile auf dem Gerüst mittels des bzw. eines Adhäsivs (zur üblichen Vorgehensweise siehe oben),
- Bilden einer Negativform (Hohlform) einer Verblendung für das Gerüst durch Einschließen von Adhäsiv und Modellteil bzw. Modellteilen zwischen dem Gerüst und einem Formmaterial und anschließendes Entfernen von Adhäsiv und Modellteil bzw. Modellteilen durch Ausschmelzen und/oder Ausbrennen und
- Füllen der Negativform mit Verblendmaterial mittels eines Heißpressverfahrens zur Herstellung der dentalen Prothese.

Erfindungsgemäße Verfahren (und entsprechend auch erfindungsgemäße Elementesätze) besitzen gegenüber bekannten Verfahren den Vorteil, dass das bzw. die Modellteile nicht unmittelbar am Gerüst anliegen. Hieraus resultiert, dass verfahrensbedingte Ungenauigkeiten bei der Erzeugung von Gerüst und dem bzw. den Modellteilen sich in der Praxis nicht bzw. nicht nennenswert auswirken. Soll beispielsweise auf ein metallisches (Grund-)Gerüst eine Opakerschicht aufgetragen werden, lässt sich deren Schichtdicke nicht genau vorherbestimmten. Da erfindungsgemäß aber ein Spalt zwischen Gerüst (inklusive Opakerschicht) und dem bzw. den Modellteilen vorgesehen ist, wirkt sich diese fehlende Vorherbestimmbarkeit der Schichtdicke nicht negativ aus.

In einem erfindungsgemäßen Verfahren zum Herstellen einer dentalen Prothese enden das bzw. die Modellteile vorzugsweise in einem Abstand von 0 bis 3 mm, vorzugsweise 0,5 bis 3 mm vor der Präparationsgrenze (die beispielsweise am Meistermodell zu erkennen ist, auf welches im erfindungsgemäßen Verfahren das Gerüst vorzugsweise aufgesetzt wird). In einer weiteren bevorzugten Variante endet das Modellteil bzw. die Modellteile auf Höhe des Äquators der Prothese. Diese Alternative kann z. B. bevorzugt sein, wenn starke Unterscheidungen das Aufsetzen eines einteiligen Modells nicht ermöglichen, zusätzliche Modellteile aber nicht erwünscht sind. Bei beiden bevorzugten Verfahren wird der nicht modellierte Teil der Verblendung üblicherweise mit einem entsprechenden Material (z. B. Wachs) aufgefüllt.

Die vorliegende Erfindung betrifft auch ein System zur Herstellung einer dentalen Prothese oder eines erfindungsgemäßen Elementesatzes (wie oben beschrieben, vorzugsweise in einer oben als besonders bevorzugt gekennzeichneten Ausgestaltung). Ein solches System umfasst erfindungsgemäß
- ein Vorbestimmungsmittel zum Vorbestimmen dreidimensionaler Geometriedaten eines Gerüstes und eines oder mehrerer Modellteile zur Definition von Teilen der Außenkontur einer Verblendung für das Gerüst und gegebenenfalls eines Gießkanals, wobei das bzw. die Modellteile auf das Gerüst so aufsetzbar sind, dass gleichzeitig
   (i) zwischen dem bzw. den Modellteilen und dem Gerüst ein Spalt verbleibt und
   (ii) das bzw. die Modellteile Teile der Außenkontur, vorzugsweise wesentliche Teile der Außenkontur, definieren,
- ein Gerüstherstellungsmittel zur Herstellung des Gerüstes auf Basis der dreidimensionalen Geometriedaten und
- ein Modellteileherstellungsmittel zur Herstellung des oder der Modellteile auf Basis der dreidimensionalen Geometriedaten.

Die in einem erfindungsgemäßen System vorhandenen Vorbestimmungsmittel arbeiten vorzugsweise rechnergestützt.

Die in einem erfindungemäßen System vorgesehenen Gerüstherstellungsmittel und/oder die vorgesehenen Modellteileherstellungsmittel sind in einem erfindungsgemäßen System vorzugsweise zum computerunterstützten aufbauenden und/oder abtragenden Formen eingerichtet. Hierbei erfolgt das Formen vorzugsweise mittels eines Rapid-Prototyping-Verfahrens.

Vorzugsweise umfasst ein erfindungsgemäßes System neben den bereits genannten Systembestandteilen,
- Scan-Mittel zum Scannen einer Mundsituation, einer entsprechenden (Wachs-)Modellation der Prothese und/oder eines Abdrucks einer Mundsituation und zum Erzeugen entsprechender Scan-Daten, wobei das Vorbestimmungsmittel mit dem Scan-Mittel zusammenwirkt und zum rechnergestützten Vorbestimmen der dreidimensionalen Geometriedaten auf Basis der Scan-Daten und gegebenenfalls zusätzlicher Benutzereingaben eingerichtet ist.

Es versteht sich, dass sämtliche Bestandteile des erfindungsgemäßen Systems vorzugsweise zur Durchführung entsprechender Verfahrensschritte bestimmt und geeignet sind, wie sie vorstehend und nachfolgend im Detail angegeben sind.

Ein erfindungsgemäßes System umfasst vorzugsweise des Weiteren:
- Negativformbildungsmittel zum Bilden einer Negativform einer Verblendung für das hergestellte Gerüst durch Einschließen von Adhäsiv und hergestelltem Modellteil bzw. hergestellten Modellteilen zwischen dem Gerüst und einem Formmaterial und anschließendes Entfernen von Adhäsiv und Modellteil bzw. Modellteilen und/oder
- Füllmittel zum Füllen der bzw. einer hergestellten Negativform einer Verblendung für das hergestellte Gerüst mit Verblendmaterial zur Herstellung der dentalen Prothese.

Als Negativformbildungsmittel sind insbesondere die üblichen Materialien und Werkzeuge zur Herstellung von Negativformen geeignet, also beispielsweise Formmassen (insbesondere Einbettmassen), Anmischflüssigkeiten, Muffeln etc. Des Weiteren fallen unter den Begriff Negativformbildungsmittel auch Heizeinrichtungen (z. B. Vorwärmöfen) oder dergleichen, die zum Entfernen von Adhäsiv, Angusskanal/-kanälen und Modellteil bzw. Modellteilen eingesetzt werden können.

Als Füllmittel kommen insbesondere - wie bereits weiter oben mit Blick auf das erfindungsgemäße Verfahren erläutert - Verblendmaterialien in Betracht, insbesondere Presskeramiken.

Diese Presskeramiken haben vorzugsweise eine zylindrische Form.

Das erfindungsgemäße Verfahren zum Herstellen einer dentalen Prothese umfasst in einem ersten Schritt das Herstellen oder Bereitstellen eines erfindungsgemäßen Elementesatzes. Die vorliegende Erfindung betrifft entsprechend auch ein Verfahren zur Herstellung eines erfindungsgemäßen Elementesatzes, wobei ein solcher Elementesatz insbesondere zur Verwendung in einem erfindungsgemäßen Verfahren zum Herstellen einer dentalen Prothese einsetzbar sein soll. Ein solches erfindungsgemäßes Verfahren zur Herstellung eines Elementesatzes umfasst die folgenden Schritte:
- Scannen der Mundsituation, einer entsprechenden (Wachs-)Modellation der Prothese und/oder eines Abdrucks einer Mundsituation und Erzeugen entsprechender Scan-Daten,
- rechnergestütztes Bestimmen dreidimensionaler Geometriedaten ausgehend von (a) den Scan-Daten und gegebenenfalls (b) zusätzlichen Benutzereingaben,
- computerunterstütztes aufbauendes und/oder abtragendes Formen des Gerüstes und/oder des oder der Modellteile, vorzugsweise mittels eines Rapid-Prototyping-Verfahrens, auf Basis der vorbestimmten dreidimensionalen Geometriedaten.

Es versteht sich, dass in einem erfindungsgemäßen Verfahren zur Herstellung eines erfindungsgemäßen Elementesatzes vorzugsweise Scan-Mittel und/oder Vorbestimmungsmittel und/oder Gerüstherstellungsmittel und/oder Modellteilherstellungsmittel eingesetzt werden, wie sie vorstehend mit Blick auf ein erfindungsgemäßes System beschrieben wurden. Es versteht sich zudem, dass das erfindungsgemäße Verfahren zur Herstellung eines Elementesatzes als ein erster Verfahrensteil im Rahmen eines umfassenderen erfindungsgemäßen Verfahrens zur Herstellung einer dentalen Prothese eingesetzt werden kann. An die Durchführung der soeben definierten Verfahrensschritte (Scannen der Mundsituation; rechnergestütztes Bestimmen dreidimensionaler Geometriedaten; computerunterstütztes Formen des Gerüstes und/oder des oder der Modellteile) schließen sich in einem derart ausgestalteten Verfahren zum Herstellen einer dentalen Prothese die oben im Detail erläuterten Schritte "Aufsetzen", "Fxieren", "Bilden einer Negativform" sowie "Füllen der Negativform" an.

Vorzugsweise wird in einem erfindungsgemäßen Verfahren zur Herstellung eines Elementesatzes ein erfindungsgemäßes System bereitgestellt und
- zum rechnergestützten Bestimmen der dreidimensionalen Geometriedaten und
- zum computerunterstützten aufbauenden und/oder abtragenden Formen des Gerüstes und/oder des oder der Modellteile
   und gegebenenfalls
- zum Scannen der Mundsituation, einer entsprechenden (Wachs-)Modellation der Prothese und/oder des Abdrucks einer Mundsituation und zum Erzeugen entsprechender Scan-Daten
eingesetzt.

Weitere Aspekte der vorliegenden Erfindung ergeben sich aus der nachfolgenden Figurenbeschreibung und den beigefügten Patentansprüchen.

Die Erfindung wird nachfolgend anhand beigefügter Figuren näher erläutert. Es zeigen:
- Fig. 1: Modell 1 eines Zahnstumpfes.
- Fig. 2: Gerüst 3, welches auf das Modell 1 gemäß Fig. 1 aufgesetzt ist.
- Fig. 3a: Gerüst 3 gemäß Fig. 2 sowie zugehöriges Modellteil 5
- Fig. 3b: Gerüst 3 gemäß Fig. 2 sowie zwei zugehörige Modellteile 5a, 5b
- Fig. 4: Gerüst 3 und Modellteil 5 gemäß Fig. 3a mit spaltfüllend angeordnetem Adhäsiv 17.
- Fig. 5: Anordnung gemäß Fig. 4 mit zusätzlich angesetztem Gießkanal 19, eingebettet in Einbettmasse 11.
- Fig. 6: Zwischen Einbettmasse 11 und dem Gerüst 3 aus Fig. 2 eingeschlosse- ne Negativform 13
- Fig. 7: Anordnung gemäß Fig. 6, wobei jedoch die Negativform 13 mit Ver- blendmaterial 15 gefüllt ist.
- Fig. 8: Dentale Prothese 20 aus Gerüst 3 und Verblendung 15, die auf das Modell 1 gemäß Fig. 1 aufgesetzt wird.
- Fig. 9: Fließbild einer ersten Ausführungsform eines erfindungsgemäßen Ver- fahrens zur Herstellung einer dentalen Prothese.
- Fig. 10: Fließbild einer ersten Ausführungsform eines erfindungsgemäßen Ver- fahrens zur Herstellung eines Elementesatzes, der zur Verwendung in einem erfindungsgemäßen Verfahren geeignet ist, insbesondere zur Verwendung in einem Verfahren gemäß Fig. 9.
- Fig. 11: Anordnung analog 3a, jedoch mit einem Gerüst 23 annähernd konstanter Dicke.
- Fig. 12: Anordnung analog Fig. 4, mit Illustration der Parameter der dreidimensi- onalen Geometriedaten.

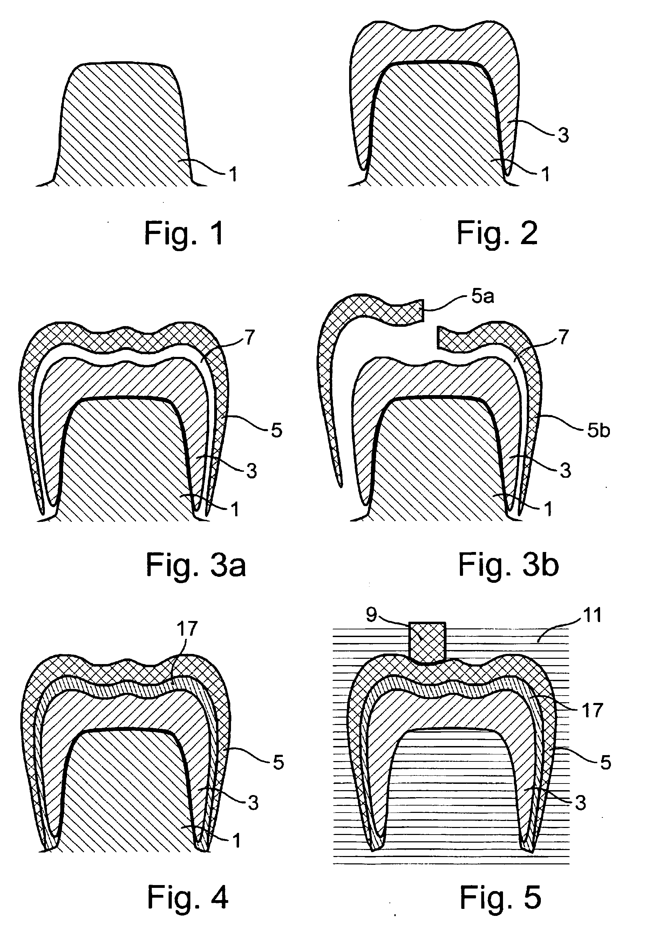

Fig. 1 zeigt ein Modell 1 eines Zahnstumpfes. Von Bedeutung sind hierbei insbesondere die geometrischen Daten der Außenkontur des Modelles 1, an die die Innenkontur des Gerüstes 3 (siehe Fig. 2) angepasst wird.

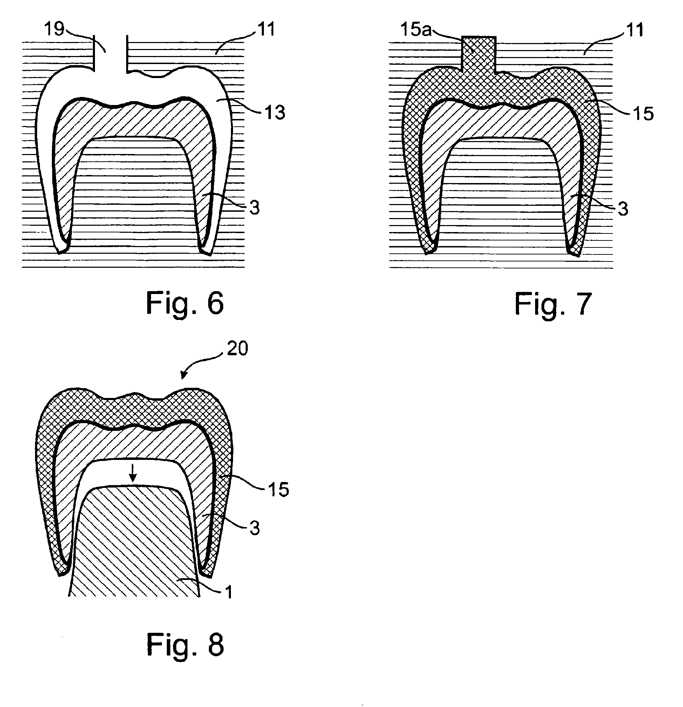

Fig. 2 zeigt das Modell 1 eines Zahnstumpfes gemäß Fig. 1 und ein darauf angeordnetes Gerüst 3 mit einer an die Außenkontur des Modells 1 (siehe Fig. 1) angepassten Innenkontur. Der untere Rand des Gerüstes 3 endet 1-2,5 mm vor der Präparationsgrenze des Modells 1 (und entsprechend des tatsächlichen Zahnstumpfes) in Richtung Kiefer. Eine solche "vertikale Reduzierung" ist aus ästhetischen Gründen bevorzugt und ermöglicht die Ausbildung einer Keramikschulter. Das Gerüst 3 besitzt eine anatomische reduzierte Form, das heißt die Dicke des Gerüstes 3 ist nicht konstant und seine Gestalt ähnelt bereits der der angestrebten dentalen Prothese 20 (vgl. Fig. 8); selbstverständlich ist das Gerüst 3 jedoch kleiner als die angestrebte dentale Prothese 20.

Fig. 3a zeigt das Gerüst 3 mit einem darauf mittels eines Artikulators aufgesetzten Modellteil 5. Das Modellteil 5 definiert wesentliche Teile der Außenkontur einer Verblendung 15 des Gerüstes 3, jedoch nicht die Innenkontur der Verblendung 15. Gerüst 3 und Modellteil 5 wurden auf Basis von Scan-Daten erzeugt, die durch Scannen der Mundsituation, einer (Wachs-)Modellation der Prothese und/oder eines Abdrucks der Mundsituation (inklusive Gegenbiss) erhalten wurden. Gegebenenfalls wurden zusätzliche Benutzereingaben berücksichtigt.

Zwischen dem Modellteil 5 und dem Gerüst 3 befindet sich ein Spalt 7, der zur Aufnahme zähflüssigen Adhäsivs 17 bestimmt ist. Das Modellteil 5 besteht aus einem Wachs- oder Kunststoffmaterial, welches (in einem Vorwärmofen) im Wesentlichen rückstandsfrei verbrennbar ist. Das Modellteil 5 lässt sich auf das Gerüst 3 aufsetzen, obwohl sich das Gerüst 3 nach unten hin etwas verjüngt und somit eine gewisse Unterschneidung vorhanden ist. Dies ist möglich, da das Modellteil 5 eine gewisse Flexibilität besitzt und die Spaltbreite ausreichend bemessen ist. Alternativ können zwei oder mehr Modellteile 5 eingesetzt werden, die gemeinsam die Außenkontur der Verblendung 15 definieren. Eine solche Ausgestaltung ist in Fig. 3b gezeigt.

Fig. 4 zeigt das Gerüst 3 und das Modellteil 5 in der Anordnung gemäß Fig. 3a. Der in der Anordnung gemäß Fig. 3a noch vorhandene Spalt 7 ist jedoch in der Anordnung gemäß Fig. 4 durch ein Adhäsiv 17 ausgefüllt, welches das Modellteil 5 auf dem Gerüst 3 fixiert. Adhäsiv 17 und Modellteil 5 bilden zusammen das Modell 5 einer Verblendung 15 für das Gerüst 3.

Fig. 5 zeigt die Anordnung gemäß Fig. 4, wobei zusätzlich auf dem Modellteil 5 das Modell 9 eines Gießkanals 19 angeordnet ist. Die in Fig. 5 dargestellte Anordnung ist in eine Einbettmasse 11 eingebettet.

Fig. 6 zeigt die in Fig. 5 dargestellte Einbettung des Gerüstes 3 in einer Einbettmasse 11 wobei Modellteil 5 und Adhäsiv 17 sowie Modell 9 des Gießkanals 19 entfernt sind (z. B. durch Ausbrennen in einem Vorwärmofen). An der Stelle der besagten Elemente befindet sich eine Negativform 13 (Hohlfrom) der Verblendung 15, die über einen Gießkanal 19 gefüllt werden kann.

Die Darstellung in Fig. 7 entspricht der Darstellung aus Fig. 6, wobei die Negativform 13 der Verblendung 15 mit Verblendmaterial (Presskeramik) 15 gefüllt ist. Der Gießkanal 19 enthält ebenfalls Verblendmaterial 15a.

Fig. 8 zeigt die fertiggestellte dentale Prothese 20 mit dem Gerüst 3 und der Verblendung 15, die auf das Modell des Zahnstumpfes 1 sowie (unter Berücksichtigung der Notwendigkeit eines Zementspalts 21) den entsprechenden Zahnstumpf (nicht dargestellt) passt. Das Verblendmaterial 15a im Bereich des Gießkanals wurde zuvor von der Verblendung 15 entfernt.

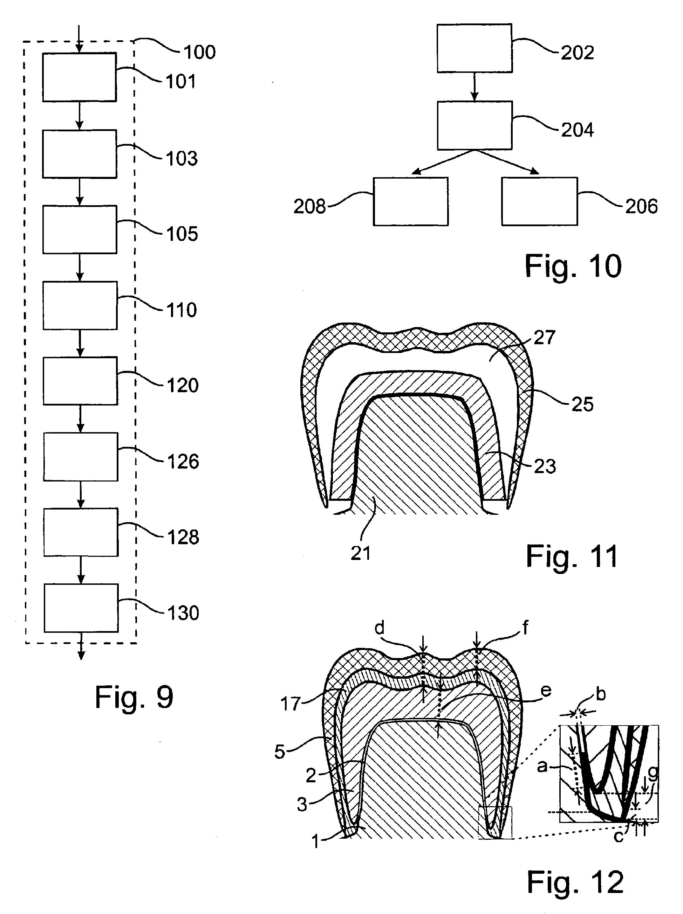

Fig. 9 zeigt im Fließbild eine erste Ausführungsform eines erfindungsgemäßen Verfahren zum Herstellen einer dentalen Prothese. In einem ersten Schritt 101 des Verfahrens 100 wird ein erfindungsgemäßer Elementesatz bereitgestellt, der ein Gerüst sowie ein oder mehrere Modellteile zur Definition der Außenkontur einer Verblendung für das Gerüst umfasst, wobei das bzw. die Modellteile auf das Gerüst so aufsetzbar sind, dass gleichzeitig (i) zwischen dem bzw. den Modellteilen und dem Gerüst ein Spalt verbleibt und (ii) das bzw. die Modellteile die Außenkontur und gegebenenfalls den Gießkanal definieren.

In einem zweiten Schritt 103 wird Adhäsiv auf die Innenseite des bzw. der Modellteile und/oder auf das Gerüst appliziert.

In einem weiteren Schritt 105 werden das bzw. die Modellteile so auf das Gerüst aufgesetzt, dass
(i) zwischen dem bzw. den Modellteilen und dem Gerüst ein (mit Adhäsiv zumindest teilweise gefüllter) Spalt verbleibt und gleichzeitig
(ii) das bzw. die Modellteile die Außenkontur und gegebenenfalls einen Gießkanal definieren. Vorzugsweise erfolgt das Aufsetzen des bzw. der Modellteile auf das Gerüst unter Verwendung eines Artikulators. Das Adhäsiv fixiert das bzw. die Modellteile auf dem Gerüst. Überschüssiges Adhäsiv wird in der Nähe der Präparationsgrenze aus dem Spalt herausgedrückt und entfernt.

Vergleiche insoweit insbesondere die Figuren 3a, 3b und 4.

In einem separaten Folgeschritt 110 wird ein Gießkanal (bei mehreren zu verblendenden Einheiten mehrere Gießkanäle) auf das Modellteil bzw. die Modellteile aufgesetzt.

Im Anschluss daran wird in einem Schritt 120 die Anordnung aus Gerüst, Adhäsiv, Modellteil bzw. Modellteilen sowie Gießkanal in ein Formmaterial (Einbettmasse) eingebettet, vgl. insbesondere Fig. 5.

Im Anschluss daran werden in einem Schritt 126 das Adhäsiv und das Modellteil bzw. die Modellteile entfernt, zum Beispiel durch thermische Behandlung ausgebrannt. Es resultiert eine Negativform zwischen Gerüst und Einbettmasse. Vergleiche insoweit insbesondere Fig. 6.

In einem Folgeschritt 128 wird die Negativform mit Verblendmaterial zur Herstellung der dentalen Prothese gefüllt, vorzugsweise mittels eines Heißpressverfahrens. Vergleiche insoweit insbesondere Fig. 7.

Das Verfahren des Heißpressens einer Keramik in eine geeignete Form ist dem Fachmann bekannt, so dass hier darauf verzichtet wird, näher auf dieses Verfahren einzugehen. Ein Verfahren und ein entsprechender Ofen zur Herstellung von Zahnersatzteilen durch das Heißpressverfahren ist beispielsweise in EP 0 231 773 A1 beschrieben. Eine Anwendung dieses Verfahrens zur Herstellung eines vollkeramischen Dentalaufbaus mit einem Zirkonoxidstift als Gerüst wird in DE 196 30 412 A1 vorgeschlagen. Eine Weiterbildung des Verfahrens aus EP 0 231 773 A1 lässt sich DE 101 36 584 A1 entnehmen.

In einem zusätzlichen Schritt 130 wird die hergestellte dentale Prothese (nach Abtrennen des Gießkanals) zu Probezwecken auf das Meistermodell oder auf den Zahnstumpf bzw. die Zahnstümpfe aufgesetzt und bei Bedarf aufgepasst (Aufpassen beinhaltet hierbei das Anpassen des Gerüsts und oder der Prothese auf den Zahnstumpf, meistens durch Fräsen und Schleifen). Vergleiche insoweit insbesondere Fig. 8.

Fig. 10 zeigt im Fließbild eine erste Ausführungsform eines erfindungsgemäßen Verfahrens zur Herstellung eines Elementesatzes, der zur Verwendung in einem erfindungsgemäßen Verfahren zur Herstellung einer dentalen Prothese geeignet ist, insbesondere zur Verwendung in einem Verfahren gemäß Fig. 9.

In einem ersten Schritt 202 wird ein Scan-Mittel eingesetzt, um eine Mundsituation, eine (Wachs-)Modellation und/oder einen Abdruck einer Mundsituation (inklusive Gegenbiss) zu scannen und entsprechende Scan-Daten zu erzeugen. In einem Folgeschritt 204 wird ein Vorbestimmungsmittel eingesetzt, um rechnergestützt dreidimensionale Geometriedaten des herzustellenden Gerüstes und des bzw. der herzustellenden Modellteile zur Definition der Außenkontur einer Verblendung für das Gerüst vorzubestimmen. Das Gerüst und das bzw. die Modellteile, deren dreidimensionale Geometriedaten vorzubestimmen sind, sind dabei so auszugestalten, dass das bzw. die Modellteile auf das Gerüst so aufsetzbar sind, dass gleichzeitig (i) zwischen dem bzw. den Modellteilen und dem Gerüst ein Spalt verbleibt und (ii) das bzw. die Modellteile Teile der Außenkontur definieren. Zusätzlich können beim rechnergestützten Bestimmen der dreidimensionalen Geometriedaten in Schritt 204 zusätzliche Benutzereingaben berücksichtigt werden, welche der Benutzer am Vorbestimmungsmittel oder mittels eines Eingabemittels (z. B. einer Computertastatur), welches mit dem Vorbestimmungsmittel zusammenwirkt, vornehmen kann.

In einem Folgeschritt 206 wird auf Basis der dreidimensionalen Geometriedaten mittels eines Gerüstherstellungsmittels das Gerüst hergestellt, welches zum Beispiel mit seiner Innenkontur präzise auf das Modell eines Zahnstumpfes passt. Vergleiche insoweit insbesondere Fig. 2. Das Gerüstherstellungsmittel ist dabei vorzugsweise zum aufbauenden und/oder abtragenden Formen eingerichtet und insbesondere zur Durchführung eines Rapid-Prototyping-Verfahrens geeignet. Vorzugsweise wird somit das Gerüst mittels eines Rapid-Prototyping-Verfahrens hergestellt (geformt).

In einem Schritt 208, der zeitgleich oder zeitversetzt zum Schritt 206 durchgeführt werden kann, wird bzw. werden in dem Verfahren gemäß Fig. 10 mittels eines Modellteileherstellungsmittels das bzw. die Modellteile hergestellt, welche die Außenkontur einer späteren Verblendung definieren und auf das Gerüst aufsetzbar sind, so dass ein Spalt verbleibt. Das Modellteileherstellungsmittel ist vorzugsweise wiederum (und ganz ähnlich zum Gerüstherstellungsmittel) zum computerunterstützten aufbauenden und/oder abtragenden Formen eingerichtet. Vorzugsweise erlaubt das Modellteileherstellungsmittel die Durchführung eines Rapid-Prototyping-Verfahrens.

Besonders bevorzugt wird in Schritt 206 zur Herstellung des Gerüstes keramisches oder metallisches Material eingesetzt und dieses Material gefräst oder lasergesintert.

Vorzugsweise wird in Schritt 208 zur Herstellung des bzw. der Modellteile Wachs oder Kunststoff eingesetzt und die Modellteile daraus mittels eines aufbauenden computergestützten Verfahrens wie 3D-Printen oder Stereolithographie oder mittels eines abtragenden computergeschützten Verfahrens wie Fräsen hergestellt.

Vorzugsweise wirkt das in Schritt 202 eingesetzte Scan-Mittel mit dem in Schritt 204 eingesetzten Vorbestimmungsmittel zusammen, wobei das Vorbestimmungsmittel zum rechnergestützten Vorbestimmen der dreidimensionalen Geometriedaten auf Basis der Scan-Daten und gegebenenfalls zusätzlicher Benutzereingaben eingerichtet ist.

Die in den Schritten 206 bzw. 208 hergestellten Elemente (Gerüst sowie Modellteil bzw. Modellteile) können insbesondere in Schritt 101 des Verfahrens gemäß Fig. 9 bereitgestellt werden und somit zur Herstellung einer dentalen Prothese dienen.

Die Scan-Mittel können so eingerichtet sein, dass sie (i) eine optische Aufnahme direkt im Munde des Patienten (auch etwa mittels Röntgenaufnahmen) oder an einen Modell des Gebisses oder (ii) eine direkte oder indirekte mechanische Aufnahme (Abtasten) ermöglichen. Andere Scan-Verfahren sind jedoch ebenfalls möglich.

Fig. 11 zeigt die Anordnung eines Gerüstes 23 mit im Wesentlichen konstanter Dicke auf dem Modell 21 eines Zahnstumpfes. Auf das Gerüst 23 aufgesetzt ist ein Modellteil 25. Zwischen Modellteil 25 und Gerüst 23 befindet sich ein Spalt 27. Die Anordnung gemäß Fig. 11 entspricht der Anordnung gemäß Fig. 3a, wobei allerdings in Fig. 11 anstelle eines anatomisch reduzierten Gerüstes ein Gerüst 3 mit im Wesentlichen konstanter Dicke dargestellt ist. Es versteht sich, dass die vorliegende Erfindung auch den Einsatz von Gerüsten 3 ermöglicht, die weder als anatomisch reduziert bezeichnet werden können, noch eine im Wesentlichen konstante Dicke besitzen.

Fig. 12 zeigt die Anordnung gemäß Fig. 4, wobei zusätzlich ein Zementspalt 2 zwischen dem Gerüst 3 und dem Modell 1 des Zahnstumpfes (bzw. dem realen Zahnstumpf) dargestellt ist. Der Zementspalt 2 ermöglicht das Verkleben/Zementieren der dentalen Prothese 20 mit dem Zahnstumpf. Illustriert sind ebenfalls Parameter der dreidimensionalen Geometriedaten, anhand derer das Gerüst 3 und das oder die Modellteile 5 erzeugt werden; die zeichnerisch dargestellten Positionen von Parameterbestimmungen sind dabei teilweise nur beispielhaft.
a Länge des unmittelbar, d. h. ohne Zementspalt 2, am Modell 1 des Zahnstumpfes anliegenden Bereiches des Gerüsts 3. Dieser Bereich beginnt am unteren Rand des Gerüsts 3. a liegt im Bereich von 0 bis 2 mm, vorzugsweise im Bereich von 0,1 bis 0,5 mm.
b Dicke des Zementspalts 2
c Abstand des oder der Modellteile 5 von der Präparationsgrenze (vertikale Reduzierung des oder der Modellteile 5). c liegt vorzugsweise im Bereich von 0 bis 3 mm.
d Maß für die anatomische Reduzierung des Gerüsts 3.
e Dicke des Gerüsts 3
f Dicke des bzw. der Modellteile 5
g Maß für die vertikale Reduzierung des Gerüsts 3

Die Anordnung gemäß Fig. 12 zeigt ein anatomisch reduziertes Gerüst 3. Es versteht sich, dass auch Gerüste mit einer im Wesentlichen konstanten Dicke e oder nicht anatomisch reduzierte Gerüste mit einer variablen Dicke e eingesetzt werden können. In einem solchen Fall beschreibt der Parameter d den Abstand zwischen Gerüst und der Außenkontur einer Verblendung für das Gerüst 3.

## Patentansprüche

1. Elementesatz, zur Verwendung bei der Herstellung einer dentalen Prothese (20), insbesondere einer Krone, einer Brücke, eines Inlays oder eines Onlays, umfassend:
- ein Gerüst (3) und
- ein oder mehrere Modellteile (5) zur Definition von Teilen der Außenkontur einer Verblendung (15) für das Gerüst (3),
wobei das oder die Modellteile (5) auf das Gerüst (3) so aufsetzbar sind, dass gleichzeitig
(i) zwischen dem oder den Modellteilen (5) und dem Gerüst (3) ein Spalt (7) verbleibt und
(ii) das oder die Modellteile (5) Teile der Außenkontur, definieren,
wobei das oder die Modellteile (5) bei einer Temperatur schmelzbar oder verbrennbar sind, bei der das Gerüst (3) stabil ist,
**dadurch gekennzeichnet, dass**
das Gerüst und das bzw. die mehreren Modellteile so gestaltet sind, dass zwischen ihnen zumindest abschnittsweise ein Spalt mit einer Dicke im Bereich von 0,05 bis 3 mm vorliegt, wenn das bzw. die Modellteile in vorgesehener Weise die Außenkontur der dentalen Prothese definieren.

2. Elementesatz nach Anspruch 1, weiter umfassend
- ein Adhäsiv (17) zum zumindest teilweisen Ausfüllen des Spalts (7) und zum Fixieren des oder der Modellteile (5) auf dem Gerüst (3).

3. Elementesatz nach einem der vorangehenden Ansprüche, weiter umfassend ein oder mehrere Elemente aus der Gruppe bestehend aus:
Material zur Herstellung eines Modells eines Gießkanals (9),
- Formmaterial (11),
- Anmischflüssigkeit,
- Verblendmaterial (15),
- Glasurmasse,
- Malfarben,
- Opaker,
- Modelliermaterial und
- Pressstempel,

4. Elementesatz nach einem der vorangehenden Ansprüche, wobei das Gerüst (3) ein Metall, eine Metalllegierung, eine Glaskeramik und/oder ein Keramikmaterial umfasst oder daraus besteht.

5. Elementesatz nach einem der vorangehenden Ansprüche, wobei das Gerüst (3) (a) eine anatomisch reduzierte Form mit variierender Dicke oder (b) eine zumindest im wesentlichen konstante Dicke besitzt.

6. Elementesatz nach einem der vorangehenden Ansprüche, wobei
- das Gerüst (3) eine oder mehrere Unterschneidungen besitzt und/oder das Gerüst (3) einer Brücke ist
und
- zwei oder mehr Modellteile (5) vorgesehen sind.

7. Verfahren zum Herstellen einer dentalen Prothese (20) mit einem Gerüst (3) und einer Verblendung (15), insbesondere einer Krone, einer Brücke, eines Inlays oder eines Onlays, mit den Schritten:
- Herstellen oder Bereitstellen eines Elementesatzes nach einem der vorangehenden Ansprüche,
- Aufsetzen des oder der Modellteile (5) auf das Gerüst (3), so dass
(i) zwischen dem oder den Modellteilen (5) und dem Gerüst (3) ein Spalt (7) verbleibt und gleichzeitig
(ii) das oder die Modellteile (5) die Außenkontur definieren,
- Fixieren des oder der Modellteile (5) auf dem Gerüst (3) mittels eines Adhäsivs (17),
- Bilden einer Negativform (13) einer Verblendung (15) für das Gerüst (3) durch Einschließen von Adhäsiv (17) und Modellteil oder Modellteilen (5) zwischen dem Gerüst (3) und einem Formmaterial (11) und anschließendes Entfernen von Adhäsiv (17) und Modellteile oder Modellteilen (5) und
- Füllen der Negativform (13) mit Verblendmaterial (15) zur Herstellung der dentalen Prothese (20).

8. Verfahren nach Anspruch 7, mit folgendem Schritt:
- aufbauendes und/oder abtragendes Formen des Gerüstes (3) und/oder
- aufbauendes und/oder abtragendes Formen des oder der Modellteile (5) zur Definition der Außenkontur einer Verwendung (15) for das Gerüst (3).

9. Verfahren nach Anspruch 8, wobei das Formen des Gerüstes (3) und/oder des oder der Modellteile (5) mittels computerunterstützter Fertigung erfolgt.

10. Verfahren nach einem der Ansprüche 8 und 9, wobei das Formen des Gerüstes (3) und/oder des oder der Modellteile (5) auf Basis vorbestimmter dreidimensionaler Geometriedaten erfolgt.

11. Verfahren nach Anspruch 10, wobei die Mundsituation, eine Modellation und/oder ein Abdruck der Mundsituation gescannt werden und die dreidimensionalen Geometriedaten auf Basis der so erhaltenen Scan-Daten rechnergestützt vorbestimmt werden.

12. Verfahren nach Anspruch 11, wobei bei dem Vorbestimmen der dreidimensionalen Geometriedaten zusätzliche Benutzereingaben berücksichtigt werden.

13. Verfahren nach einem der Ansprüche 7 bis 12, mit folgenden Schritten:
- Herstellen eines Elementesatzes nach einem der vorangehenden Anspruche 1 bis 6, wobei das im Elementesatz vorhandene Gerüst (3) und/oder das oder die darin vorhandenen Modellteile (5) computerunterstützt durch aufbauendes und/oder abtragendes Formen auf Basis vorbestimmter dreidimensionaler Geometriedaten hergestellt werden,
- Aufsetzen des oder der Modellteile (5) auf das Gerüst (3), so dass
(i) zwischen dem oder den Modellteilen (5) und dem Gerüst (3) ein Spalt (7) verbleibt und gleichzeitig
(ii) das oder die Modellteile (5) die Außenkontur definieren,
- Fixieren des oder der Modellteile (5) auf dem Gerüst (3) mittels eines Adhäsivs (17),
- Bilden einer Negativform (13) einer Verblendung (15) für das Gerüst (3) durch Einschließen von Adhäsiv (17) und Modellteil oder Modellteilen (5) zwischen dem Gerüst (3) und einem Formmaterial (11) und anschließendes Entfernen von Adhäsiv (17) und Modellteil oder Modellteilen (5) durch Ausschmelzen und/oder Ausbrennen und
- Füllen der Negativform (13) mit Verblendmaterial (15) mittels eines Heißpressverfahrens zur Herstellung der dentalen Prothese (20).

14. System zur Herstellung einer dentalen Prothese (20) oder eines Elementesatzes nach einem der Ansprüche 1 bis 6, umfassend
- ein Vorbestimmungsmittel zum Vorbestimmen dreidimensionaler Geometriedaten eines Gerüstes (3) und eines oder mehrerer Modellteile (5) zur Definition von Teilen der Außenkontur einer Verblendung (15) für das Gerüst (3) und gegebenenfalls eines Gießkanals (19),
wobei das oder die Modellteile (5) auf das Gerüst (3) so aufsetzbar sind, dass gleichzeitig
(i) zwischen dem oder den Modellteilen (5) und dem Gerüst (3) ein Spalt (7) verbleibt und
(ii) das oder die Modellteile (5) Teile der Außenkontur definieren,
wobei das Gerüst und das bzw. die mehreren Modellteile so gestaltet sind, dass zwischen ihnen zumindest abschnittsweise ein Spalt mit einer Dicke im Bereich von 0.05 bis 3 mm vorliegt, wenn das bzw. die Modellteile in vorgesehener Weise die Außenkontur der dentalen Prothese definieren.
- ein Gerüstherstellungsmittel zur Herstellung des Gerüstes (3) auf Basis der dreidimensionalen Geometriedaten und
- ein Modellteileherstellungsmittel zur Herstellung des oder der Modellteile (5) auf Basis der dreidimensionalen Geometriedaten.

15. System nach Anspruch 14, wobei das Gerüstherstellungsmittel und/oder das Modellteileherstellungsmittel zum computerunterstützten aufbauenden und/oder abtragenden Formen eingerichtet sind.

16. Verfahren zur Herstellung eines Elementesatzes nach einem der Ansprüche 1 bis 6, insbesondere eines Elementesatzes zur Verwendung in einem Verfahren nach einem der Ansprüche 7 bis 13,
wobei das Verfahren zur Herstellung des Elementesatzes folgende Schritte umfasst :
- Scannen der Mundsituation, einer entsprechenden Modellation der Prothese und/oder eines Abdrucks einer Mundsituation und Erzeugen entsprechender Scan-Daten.
- rechnergestütztes Bestimmen dreidimensionaler Geometriedaten ausgehend von den Scan-Daten,
- computerunterstütztes aufbauendes und/oder abtragendes Formen des Gerüstes (3) und/oder des oder der Modellteile (5), vorzugsweise mittels eines Rapid-Prototyping-Verfahrens, auf Basis der vorbestimmten dreidimensionalen Geometriedaten.

## Claims

1. A set of elements for use in the production of a dental prosthesis (20), in particular of a crown, a bridge, an inlay or an onlay, comprising:
- a framework (3) and
- one or more model parts (5) for defining parts of the outer contour of a veneer (15) for the framework (3),
wherein the model part or parts (5) can be mounted on the framework (3) in such a way that, at one and the same time,
(i) a gap (7) remains between the model part or parts (5) and the framework (3) and
(ii) the model part or parts (5) define parts of the outer contour,
wherein the model part or parts (5) are meltable or combustible at a temperature at which the framework (3) is stable,
**characterised in that**
the framework and the model part or the plurality of model parts are configured such that a gap with a thickness in the range from 0.05 to 3 mm is present between them, at least in sections, if the model part or parts in intended manner define the outer contour of the dental prosthesis.

2. A set of elements according to Claim 1, further comprising
- an adhesive (17) for at least partly filling out the gap (7) and for fixing the model part or parts (5) on the framework (3).

3. A set of elements according to one of the preceding claims, further comprising one or more elements from the group consisting of:
- material for producing a model of a casting channel (9),
- moulding material (11),
- mixing liquid,
- veneering material (15),
- glazing compound,
- stains,
- opaque,
- modelling material and
- press stamp.

4. A set of elements according to one of the preceding claims, wherein the framework (3) comprises or consists of a metal, a metal alloy, a glass ceramic and/or a ceramic material.

5. A set of elements according to one of the preceding claims, wherein the framework (3) has (a) an anatomically reduced shape with varying thickness or (b) an at least substantially constant thickness.

6. A set of elements according to one of the preceding claims, wherein
- the framework (3) has one or more undercuts and/or is the framework (3) of a bridge
and
- two or more model parts (5) are provided.

7. A method for producing a dental prosthesis (20) with a framework (3) and a veneer (15), in particular of a crown, a bridge, an inlay or an onlay, with the steps:
- producing or providing a set of elements according to one of the preceding claims;
- mounting the model part or parts (5) on the framework (3) in such a way that
(i) a gap (7) remains between the model part or parts (5) and the framework (3) and, at one and the same time,
(ii) the model part or parts (5) define the outer contour,
- fixing the model part or parts (5) on the framework (3) using an adhesive (17),
- forming a negative mould (13) of a veneer (15) for the framework (3) by enclosing adhesive (17) and the model part or model parts (5) between the framework (3) and a moulding material (11) and subsequently removing adhesive (17) and the model part or model parts (5) and
- filling the negative mould (13) with veneering material (15) for producing the dental prosthesis (20).

8. A method according to Claim 7, with the following step:
- additive and/or subtractive shaping of the framework (3)
and/or
- additive and/or subtractive shaping of the model part or parts (5) for defining the outer contour of a veneer (15) for the framework (3).

9. A method according to Claim 8, wherein the shaping of the framework (3) and/or of the model part or parts (5) is carried out using a computer-aided production.

10. A method according to one of Claims 8 and 9, wherein the shaping of the framework (3) and/or of the model part or parts (5) is carried out on the basis of predetermined three-dimensional geometric data.

11. A method according to Claim 10, wherein the oral situation, a wax-up and/or an impression of the oral situation are scanned and the three-dimensional geometric data are predetermined in a computer-aided manner on the basis of the scan data thus obtained.

12. A method according to Claim 11, wherein additional user inputs are taken into account in the predetermining of the three-dimensional geometric data.

13. A method according to one of Claims 7 to 12, with the following steps:
- producing a set of elements according to one of the preceding Claims 1 to 6, wherein the framework (3) present in the set of elements and/or the model part or parts (5) present therein are produced in a computer-aided manner by additive and/or subtractive shaping on the basis of predetermined three-dimensional geometric data;
- mounting the model part or parts (5) on the framework (3) such that
(i) a gap (7) remains between the model part or parts (5) and the framework (3) and, at one and the same time,
(ii) the model part or parts (5) define the outer contour;
- fixing the model part or parts (5) on the framework (3) using an adhesive (17),
- forming a negative mould (13) of a veneer (15) for the framework (3) by enclosing adhesive (17) and the model part or model parts (5) between the framework (3) and a moulding material (11) and subsequently removing adhesive (17) and the model part or model parts (5) by melting-out and/or burning-out, and
- filling the negative mould (13) with veneering material (15) using a hot pressing method for producing the dental prosthesis (20).

14. A system for producing a dental prosthesis (20) or a set of elements according to one of Claims 1 to 6, comprising
- a predetermining means for predetermining three-dimensional geometric data for a framework (3) and one or more model parts (5) for defining parts of the outer contour of a veneer (15) for the framework (3) and if appropriate of a casting channel (16), wherein the model part or parts (5) can be mounted on the framework (3) in such a way that, at one and the same time,
(i) a gap (7) remains between the model part or parts (5) and the framework (3) and
(ii) the model part or parts (5) define parts of the outer contour,
the framework and the model part or the plurality of model parts being configured such that a gap with a thickness in the range from 0.05 to 3 mm is present between them, at least in sections, if the model part or parts in intended manner define the outer contour of the dental prosthesis,
- a framework producing means for producing the framework (3) on the basis of the three-dimensional geometric data and
- a model part producing means for producing the model part or parts (5) on the basis of the three-dimensional geometric data.

15. A system according to Claim 14, wherein the framework producing means and/or the model part producing means are configured for computer-aided additive and/or subtractive shaping.

16. A method for producing a set of elements according to one of Claims 1 to 6, in particular a set of elements for use in a method according to one of Claims 7 to 13, the method for producing the set of elements comprising the following steps:
- scanning the oral situation, a corresponding wax-up of the prosthesis and/or an impression of an oral situation and generating corresponding scan data,
- determining three-dimensional geometric data in a computer-aided manner starting from the scan data,
- computer-aided additive and/or subtractive shaping of the framework (3) and/or of the model part or parts (5), preferably by means of a rapid prototyping method, on the basis of the predetermined three-dimensional geometric data.

## Revendications

1. Ensemble d'éléments destiné à être utilisé pour la réalisation d'une prothèse dentaire (20), en particulier une couronne, un bridge, un inlay ou un onlay, comportant
- un support (3) et
- un ou plusieurs modèles (5) pour définir des parties du contour extérieur d'un revêtement (15) pour le support (3),
le ou les modèles (5) étant emboîté(s) sur le support (3) de telle sorte que simultanément
(i) il subsiste une fente (7) entre le ou les modèles (5) et le support (3), et
(ii) le ou les modèles (5) définissent des parties du contour extérieur,
le ou les modèles (5) pouvant fondre ou calciner à une température à laquelle le support (3) reste stable,
**caractérisé en ce que**
le support et le ou les modèles sont configurés de telle sorte qu'il subsiste entre eux, au moins par zones, une fente avec une épaisseur dans une plage de 0,05 à 3 mm, lorsque le ou les modèles définissent de manière prévue le contour extérieur de la prothèse dentaire.

2. Ensemble d'éléments selon la revendication 1, comportant, de plus,
- un adhésif (17) pour combler au moins partiellement la fente (7) et pour fixer le ou les modèles (5) sur le support (3).

3. Ensemble d'éléments selon l'une des revendications précédentes, comportant, de plus, un ou plusieurs éléments dans le groupe constitué par:
- un matériau pour la réalisation d'un modèle d'un conduit de coulée (9),
- un matériau de moulage (11),
- un liquide de mélange,
- un matériau de revêtement (15)
- un produit de vernissage,
- desproduits de teinture,
- un opacifiant,
- un matériau de modelage, et
- un poinçon.

4. Ensemble d'éléments selon l'une quelconque des revendications précédentes, dans lequel le support (3) comporte ou est réalisé dans un métal, un alliage métallique, une vitrocéramique et/ou un matériau céramique.

5. Ensemble d'éléments selon l'une quelconque des revendications précédentes, dans lequel le support (3) possède (a) une forme diminuée par rapport à sa forme anatomique, avec une épaisseur variable ou (b) une épaisseur au moins sensiblement constante.

6. Ensemble d'éléments selon l'une quelconque des revendications précédentes, dans lequel
- le support (3) possède un ou plusieurs évidements et/ou le support (3) est un bridge,
et
- il est prévu deux modèles (5) ou plus.

7. Procédé pour la réalisation d'une prothèse dentaire (20) comportant un support (3) et un revêtement (15), en particulier une couronne, un bridge, un inlay ou un onlay, comportant les étapes :
- réalisation ou mise à disposition d'un ensemble d'éléments selon l'une quelconque des revendications précédentes,
- emboîtement du ou des modèles (5) sur le support (3), de telle sorte que
(i) il subsiste une fente (7) entre le ou les modèles (5) et le support (3), et simultanément
(ii) le ou les modèles (5) définissent le contour extérieur,
- fixation du ou des modèles (5) sur le support (3) au moyen d'un adhésif (17),
- réalisation d'un moule négatif (13) d'un revêtement (15) pour le support (3) par l'insertion de l'adhésif (17) et du modèle ou des modèles (5) entre le support (3) et le matériau de moulage (11) et enlèvement consécutif de l'adhésif (17) et du modèle ou des modèles (5), et
- remplissage du moule négatif (13) avec le matériau de revêtement (15) pour la réalisation de la prothèse dentaire (20).

8. Procédé selon la revendication 7, comportant l'étape suivante :
- formage du support (3) par accumulation ou enlèvement de matière, et/ou
- formage, par accumulation ou enlèvement de matière, du ou des modèles (5) destinés à définir le contour extérieur d'un revêtement (15) pour le support (3).

9. Procédé selon la revendication 8, dans lequel le formage du support (3) et/ou du ou des modèles (5) est réalisé au moyen d'une fabrication assistée par ordinateur.

10. Procédé selon l'une des revendications 8 et 9, dans lequel le formage du support (3) et/ou du ou des modèles (5) est réalisé sur la base de données géométriques tridimensionnelles prédéterminées.

11. Procédé selon la revendication 10, dans lequel la situation en bouche, une modélisation et/ou une empreinte de la situation en bouche sont scannées et les données géométriques tridimensionnelles sont prédéterminées de manière assistée par ordinateur sur la base des données ainsi obtenues par scanner.

12. Procédé selon la revendication 11, dans lequel des données utilisateur supplémentaires sont prises en compte lors de la prédétermination des données géométriques tridimensionnelles.

13. Procédé selon l'une quelconque des revendications 7 à 12, comportant les étapes suivantes :
- réalisation d'un ensemble d'éléments selon l'une quelconque des revendications précédentes 1 à 6, le support (3) contenu dans l'ensemble d'éléments et/ou le ou les modèles (5) contenus dans ce dernier sont réalisés de manière assistée par ordinateur par un formage par accumulation ou enlèvement de matière sur la base des données géométriques tridimensionnelles prédéterminées,
- emboîtement du ou des modèles (5) sur le support (3), de telle sorte que
(i) il subsiste une fente (7) entre le ou les modèles (5) et le support (3), et simultanément
(ii) le ou les modèles (5) définissent le contour extérieur,
- fixation du ou des modèles (5) sur le support (3) au moyen d'un adhésif (17),
- réalisation d'un moule négatif (13) d'un revêtement (15) pour le support (3) par l'insertion de l'adhésif (17) et du modèle ou des modèles (5) entre le support (3) et un matériau de moulage (11) et enlèvement consécutif de l'adhésif (17) et du modèle ou des modèles (5) par fusion et/ou calcination, et
- remplissage du moule négatif (13) avec un matériau de revêtement (15), au moyen d'un procédé de pressage à chaud, pour la réalisation de la prothèse dentaire (20).

14. Système pour la réalisation d'une prothèse dentaire (20) ou d'un ensemble d'éléments selon l'une quelconque des revendications 1 à 6, comportant
- un moyen de prédétermination pour prédéterminer des données géométriques tridimensionnelles d'un support (3) et d'un ou de plusieurs modèles (5) destinés à définir des parties du contour extérieur d'un revêtement (15) pour le support (3) et, le cas échéant, d'un conduit de coulée (19),
le ou les modèles (5) étant emboîté(s) sur le support (3) de telle sorte que simultanément
(i) il subsiste une fente (7) entre le ou les modèles (5) et le support (3), et
(ii) le ou les modèles (5) définissent des parties du contour extérieur,
le support et le ou les modèles étant configurés de telle sorte qu'il subsiste entre eux, au moins par zones, une fente avec une épaisseur dans une plage de 0,05 à 3 mm, lorsque le ou les modèles définissent de manière prévue le contour extérieur de la prothèse dentaire,
- un moyen de réalisation d'un support pour réaliser le support (3) sur la base des données géométriques tridimensionnelles, et
- un moyen de réalisation de modèles pour réaliser le ou les modèles (5) sur la base des données géométriques tridimensionnelles.

15. Système selon la revendication 14, dans lequel le moyen de réalisation d'un support et/ou le moyen de réalisation de modèles sont conçus pour le formage par accumulation et/ou par enlèvement de matière, assisté par ordinateur.

16. Procédé pour la réalisation d'un ensemble d'éléments selon l'une quelconque des revendications 1 à 6, en particulier un ensemble d'éléments destiné à être utilisé dans un procédé selon l'une quelconque des revendications 7 à 13,
le procédé pour la réalisation de l'ensemble d'éléments comportant les étapes suivantes :
- exploration par scanner de la situation en bouche, d'une modélisation correspondante de la prothèse et/ou d'une empreinte de la situation en bouche et création de données correspondantes obtenues par scanner,
- détermination assistée par ordinateur des données géométriques tridimensionnelles à partir des données obtenues par scanner,
- formage assisté par ordinateur, par accumulation et/ou enlèvement de matière, du support (3) et/ou du ou des modèles (5), de préférence au moyen d'un procédé de prototypage rapide, sur la base des données géométriques tridimensionnelles prédéterminées.
